(19)

Europäisches
Patentamt

European
Patent Office

Office européen
des brevets

(11) **EP 4 564 313 A1**

(12) **EUROPEAN PATENT APPLICATION**

(43) Date of publication:
04.06.2025 Bulletin 2025/23

(21) Application number: 23213151.6

(22) Date of filing: 29.11.2023

(51) International Patent Classification (IPC):
**G06V 10/774** (2022.01)     **G06V 10/82** (2022.01)
**G06V 20/13** (2022.01)

(52) Cooperative Patent Classification (CPC):
**G06V 10/82; G06V 10/7747; G06V 20/13**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Helsing GmbH
81671 Munich (DE)**

(72) Inventor: **KUCIK, Andrzej
81671 Munich (DE)**

(74) Representative: **Rummler, Felix
Maucher Jenkins
Liebigstraße 39
80538 München (DE)**

(54) **DATA SET GENERATION FOR IMAGE PROCESSING**

(57)     A computer-implemented method of generating subsets of a data set, the method comprising: determining an input data set comprising a plurality of data elements, wherein the data elements comprise one or more features; and splitting the data set into a first subset and a second subset such that a dissimilarity between the distributions of aggregated features included in each of the subsets is minimized.

Fig. 1

**Description**

**Technical Field**

The present disclosure relates to methods, systems, and computer program products for generating subsets of a data set. Aspects of the present disclosure further relate to methods, systems, and computer program products for generating trained machine learning modules. The subsets and the machine learning module are applicable in the field of sensor data processing. In particular, the disclosure is applicable for processing images, specifically synthetic aperture (SAR) satellite images.

**Background**

A problem when training a machine learning algorithm to process, e.g., sensor data, is providing a training and a validation test set. It is advantageous to use real-world data, such as camera images, which are typically provided as a single data set. Therefore, there is a need to provide a plurality of data sets on which a machine learning algorithm operates consistently, and which are applicable for training and validation.

It is known to select training and validation data sets by hand in a manual curation process. However, this is time-consuming. In case of frequent, incremental changes to the overall data set it could be a prohibitive drain on human labour, creating a strong incentive for automation.

There is a need for systems and methods that overcome these shortcomings.

**Summary**

Disclosed and claimed herein are systems, methods, and computer program products for generating subsets of a data set.

A first aspect of the present disclosure relates to a computer-implemented method of generating trained machine learning module. The method comprises the following steps:

- receiving a data set comprising a plurality of data elements,
- preferably applying an augmentation to one or more of the data elements, and
- training a machine learning module on the training data set to determine a feature representation of one or more of the data elements.

The machine learning module trained by this method is applicable for determining a feature representation. Determining the feature representation automatically using a machine learning module is particularly suitable for processing large data sets, wherein each data element includes an image.

In an embodiment, the augmentation includes one or more of: downsampling, tiling, concatenation, averaging, cropping, deforming, and/or rotating. The augmentations can be used to enable processing of images of diverse sizes. They allow changing the size to an input size of a machine learning module, since the input size is usually fixed. Additionally or alternatively, the augmentation may comprise a linear shift of values, scaling, and/or a normalization. This allows keeping the values in a range that can be processed by machine learning. The machine learning module may include a neural network, preferably a neural network comprising one or more residual layers. Training may include unsupervised training. This is advantageous in the case of satellite SAR images because of the limited availability of labelled data sets. Unsupervised training may include application of an auto encoder and/or contrastive learning. Alternatively, training may include a form of supervised learning.

A second aspect of the present disclosure relates to a computer-implemented method of generating subsets of a data set. The method comprises the following steps:

- determining an input data set comprising a plurality of data elements, wherein the data elements comprise one or more features; and
- splitting the data set into a first subset and a second subset such that a dissimilarity between the distributions of aggregated features included in each of the subsets is minimized. The first subset and the second subset may then be applied for training and validation, respectively. The thus generated subsets are similar as the split is wellbalanced.

By this method, the subsets can be obtained faster than when manually generating the subsets by sorting the data elements of the input data set. This is particularly advantageous in situations where new input data are provided on a regular basis, e.g. when new data are collected continuously. Another advantage compared to manual sorting is that the split into the subsets is free of human bias.

In an embodiment, splitting the data set comprises minimizing a subset distance indicative of a dissimilarity between the subsets, and the subset distance is measured by a subset distance metric. This allows a quantification of a dissimilarity from the entire subsets, such as by using global statistics, without defining separate distances for the elements.

In a further embodiment, the method further comprises determining subset feature representations indicative of features of the subsets, and the subset distance metric comprises a distance metric between subset feature representations. Determining a subset feature representation preferably includes determining a latent representation, which can be processed more efficiently than the subset. This embodiment is advantageous because it allows a direct determination of a feature representation if the subset can be represented in terms of measurable quantities.

In another embodiment, the method further comprises the following steps:

- determining respective element feature representations indicative of features of the data elements; and
- determining element distances between the feature representations by an element distance metric.

In this embodiment, the element distances are indicative of a dissimilarity between elements. The or a subset distance metric is preferably based on the element distances. This is advantageous if an algorithm for generating the representations starting from the data elements is available, but not from the entire subset, e.g. because of the dimensionality of the subset. Moreover, this approach allows reducing the necessary compute power if the input data set has been amended from an earlier version only by adding some data elements. In this case, previously determined feature representations can be reused.

The element distances are preferably determined between pairs of the feature representations of the elements. The subset distance metric preferably includes a Hausdorff metric on a metric space formed by the feature representations and the element distance metric. This allows usage of a comparably simple distance metric. However, also other definitions of distance metrics are possible, such as a distance to a calculated centre of gravity or an algorithmically determined element of a subset.

In a further embodiment, splitting the data set further includes the following steps:

- determining a pair of data elements corresponding to the feature representations at a minimal element distance; and
- moving each data element of the pair from the input data set into a respective one of the subsets.

This allows adding data elements to subsets, e.g. when an update of the input data set comprises additional data elements that have not been included in the subsets. The steps of determining a pair and moving data elements can also serve as building blocks of the entire method: The method may begin by initializing two subsets as empty sets. Then, these two steps may be repeated by iteration until no more pairs are left in the input data set.

The step of moving the data elements may comprise including a first data element of the pair into a first subset and the second data element of the pair into the second subset.

In yet another embodiment, splitting the data set comprises maximizing a dissimilarity between the data elements in one or more of the subsets. This allows increasing diversity within one or more of the subsets. More diverse subsets are more useful as training data sets, because a machine learning model trained on them is better trained to deal with variety in data. This is particularly advantageous if the model is trained on and made to process real-world data, rather than synthetic data. Specifically, this reduces problems associated with overfitting.

In yet a further embodiment, splitting the data set comprises maximizing the element distances between elements in one or more of the subsets.

The element distances may be defined pairwise. This allows using a simple measure for dissimilarity. Other distances can be determined alternatively or in addition. For instance, for one or more of the subsets, a centre of gravity can be determined and the element distances may be defined as distances from the centre of gravity to the respective element. Also, a data element comprised in the subset may be determined as a centroid of the subset. The centroid may be determined as an element that has a minimal distance to the centre of mass. The element distance related to an element may then be defined as its distance to the centroid.

In another embodiment, moving each data element of the pair into a respective one of the subsets includes maximising a sum of element distances between each data element of the pair and the subset to which it is moved. The subset distance may, e.g., be defined as the smallest distance between the data element and any data element within the subset. This allows adding more data elements to the subset when updating the input data set without generating the entire subsets anew. This reduces the necessary processing power.

In a further embodiment, the method further comprises swapping data elements between the data subsets such that:

- a dissimilarity between distributions of aggregated features of the subsets is reduced; and/or

- a dissimilarity between data elements within the subset is increased.

These optional steps allow improving data subsets that have been generated by other means and that have a higher dissimilarity across subsets or lower dissimilarity within subsets. The dissimilarities may be determined using any of the metrics provided therefor above.

In yet another embodiment, the feature representations are determined by a machine learning module. Machine learning modules have the ability to generalize. Therefore, a machine learning module is able to process real world input data sets with frequent changes more quickly and reliably than other algorithms. It is preferred to use the machine learning module determined according the first aspect.

In a further embodiment, the method further comprises training a machine learning algorithm, preferably a machine learning module determined by a method of the first aspect of the present disclosure, on one of the subsets to determine a feature representation of one or more of the data elements. It is furthermore preferred to test the trained machine learning algorithm on a second one of the subsets. Therefore, the training behaviour can be reflected in the behaviour of the machine learning algorithm during the test on the second subset. The machine learning module may include a neural network.

In a further embodiment, the data elements include samples of a classification problem, and/or images, preferably SAR images, and more preferably SAR satellite images. The method may include processing the subsets by a deep neural network as a classifier. The classifier may include a plurality of first layers that are operable to generate a latent representation, and a classification head. It is preferred to

- train the first layers of the classifier according to the first aspect of the present disclosure,
- use the trained first layers for generating the representations, and
- train the entire classifier including the trained first layers and the classification head on one of the subsets, and to test the entire classifier on another one of the subsets.

In a further embodiment, the feature representations include class histograms indicative of a class distribution of the data elements, wherein the classes preferably relate to segments included within the data elements.

A third aspect of the present disclosure relates to a system comprising one or more processors and one or more storage devices, wherein the system is configured to perform the computer-implemented method of the first and/or second aspect.

A fourth aspect of the present disclosure relates to a computer program product for loading into a memory of a computer. The computer program product comprises instructions, that, when executed by a processor of the computer, cause the computer to execute a computer-implemented method of the first and/or second aspect. In an embodiment, a non-transitory computer-readable storage medium is provided that stores instructions executable by one or more processors. The instructions comprise any of the steps of a method of the first and/or second aspect of the present disclosure.

A fifth aspect of the present disclosure relates to a trained machine learning module obtainable by the computer-implemented method of the first aspect. In an embodiment, a non-transitory computer-readable storage medium is provided that stores the trained machine learning module.

## Brief description of the drawings

The features, objects, and advantages of the present disclosure will become more apparent from the detailed description set forth below when taken in conjunction with the drawings in which like reference numerals refer to similar elements.

- Figure 1 shows a flow chart of a computer-implemented method of generating subsets of an input data set.
- Figure 2 shows a block diagram of data structures.
- Figure 3 shows a block diagram of metrics.
- Figure 4 shows a flow chart of a computer-implemented method of generating trained machine learning module.
- Figure 5 shows a block diagram of systems and computer program products.

## Detailed description of the preferred embodiments

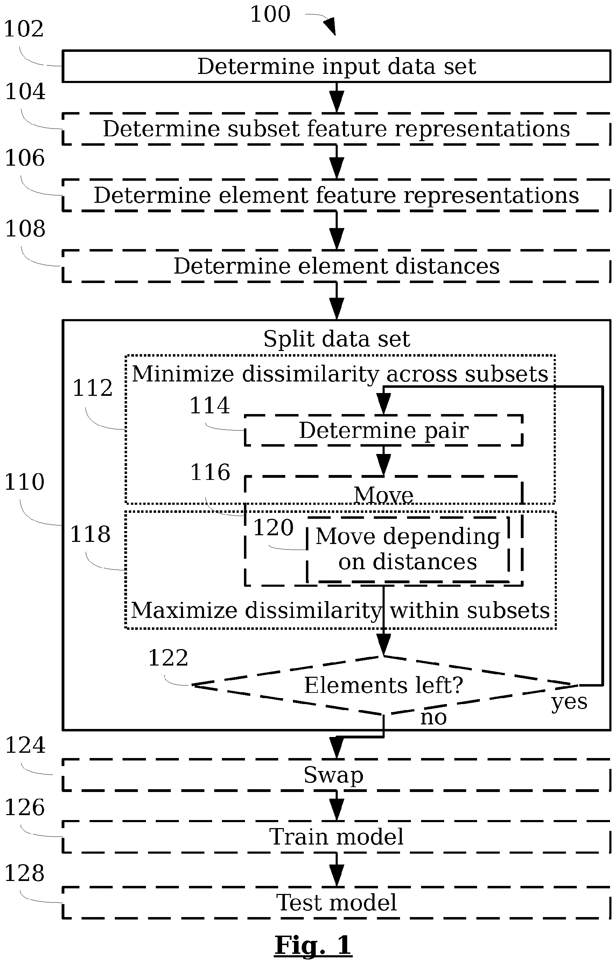

Figure 1 shows a flow chart of a computer-implemented method 100 of generating subsets of an input data set.

Computer-implemented method 100 begins by determining an input data set, 102. The input data set 102 may be received from an input unit, or from a network. In this example, the input data set includes data items that comprise images. The images may be suitable for processing by a classification algorithm performing semantic segmentation, such as determining if a part of an image shows a particular predefined object, e.g. a vehicle. In this case, the classes relate to segments on the image. However, the method is not limited to this application. It is also applicable in object detection where there are no predefined classes because it is based on feature representations that can be derived from data statistics or extracted by a machine learning model.

The method 100 splits the input data set 102 into subsets wherein the data elements (e.g. images showing a vehicle) are at least more evenly distributed than a random distribution.

At 104, subset feature representations indicative of features of the subsets are determined. This step can be directly executed if there are already subsets available, e.g., if the input data set included already data in a plurality of subsets. This is the case, e.g., if the input data set includes one or more pre-sorted subsets and one or more items that do not pertain to any subset. Alternatively, subset can be determined by initializing two subsets with randomly chosen items. The subset feature representations can include some quantities for which a metric can be defined. For example, global statistics of a subset may be calculated and used as its feature representation. The feature representations can then be used to determine distances between subsets without explicitly accessing the subset elements. In this case, splitting the data set may include an iterative process comprising:

- tentatively adding data items to a subset to generate a plurality of modified subsets,
- determining subset feature representations related to the modified subsets, and
- comparing the subset feature representations to a second subset feature representation of a second subset to determine if a dissimilarity has been reduced.

This can be iteratively repeated for a plurality of elements for a predetermined number of times, and the modified subset with the lowest dissimilarity to the second subset is kept. Alternatively, the iteration can be continued until a dissimilarity metric is below a predetermined threshold.

At optional step 106, the element feature representations are determined, preferably by a machine learning module. The feature representations preferably include latent representations that can be processed by determining element distances, 108. The element distances may then be used to determine subset distances based on the element distances. To do so, the element distance 108 may be determined pairwise between any two elements of a subset. However, it is also possible to define a centre of mass and determine the distances of each element to the centre of mass. It is also possible to determine an element as the centroid and determine the distances of each data element as distances to the centroid. The data element that is closest to the centre of mass may be chosen as a centroid. Then, it is also possible to maximize the in-subset distance by maximizing a distance between its points and the centroid.

The method proceeds by splitting, 110, the data set. Splitting may include minimizing, 112, a dissimilarity across subsets. This problem can be solved algorithmically by computing the distances for different choices for elements of subsets and choosing the subsets that have the smallest dissimilarity as detailed above.

In another embodiment, a pair of data elements of the input data set is determined, 114. The choice of the data elements to include into the pair is made so that the dissimilarity across subsets is minimised. Each data element of the pair is then moved, 116, from the input data set into one of the subsets. This allows creating similar subsets for training and validation. Specifically, for each data element in one of the subsets, there is a similar data element in the other subset. If the first subset is used to train a machine learning algorithm and the second subset is used for testing, this means that the machine learning algorithm can be trained and tested under similar conditions. Also, this procedure avoids having very similar data elements in the training set, which is not very helpful for training.

The distance between the elements (and consequently, the subsets) of a set can be determined, e.g., calculated directly using a metric. In embodiments, the subsets themselves can be represented in terms of some measurable quantities. For example, global statistics of a subset can be calculated used as its representation. Then these can be used to calculate the distance between the subsets directly, without explicitly accessing the subset elements.

In optional step 118, a dissimilarity of data elements within subsets is maximized. This may include minimizing a subset distance indicative of a dissimilarity between the subsets, wherein the subset distance is measured by a subset distance metric. In the present example, the remaining degree of freedom, i.e. the decision which data item of a pair to move to which subset, can be used such that the dissimilarity within subsets is increased. For example, the subsets can be chosen such that a sum of the distance of each data element to the subset to which it is added is maximized.

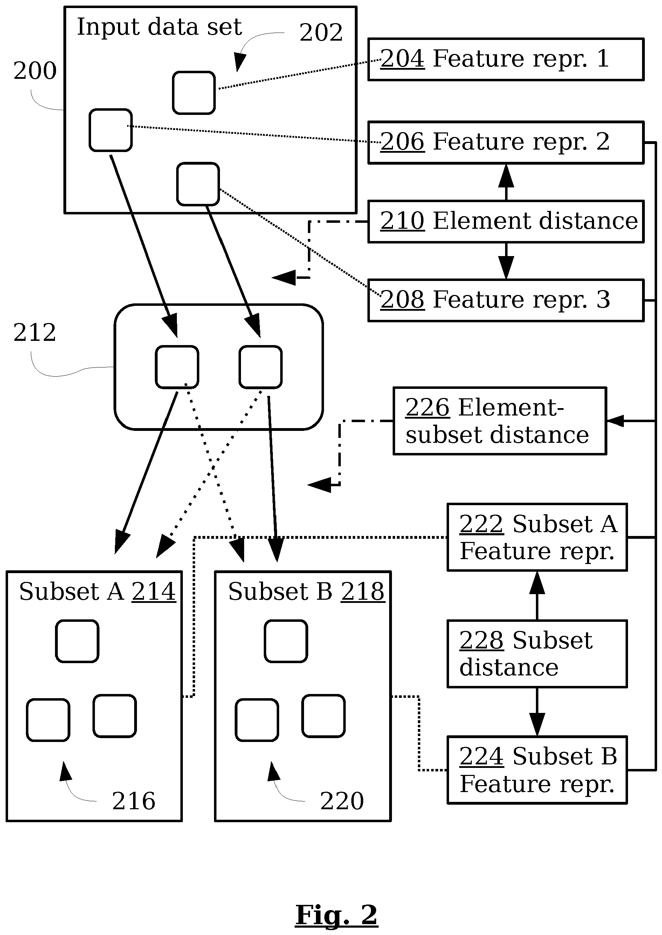

An illustrative example of this is shown in Figure 2.

The process of determining pairs and moving data items from the input data set to the subsets can be done iteratively until there are no more elements left in the input data set, 122.

It should be understood that the present disclosure is not limited to generating subsets that are exclusively composed of data elements determined in this way. The method is applicable to adding data items to subsets that already contain data items determined by other procedures. In these cases, the dissimilarity across subsets can still be reduced and is minimized with respect to the added data elements. Similarly, the dissimilarity is increased with respect to the added data elements

At this point, there are subsets useable for training and validation of machine learning algorithms. At the optional step 124 of swapping data elements between the data subsets such that a dissimilarity between distributions of aggregated features of the subsets is reduced and/or a dissimilarity between data elements within the subset is increased. For example, starting from two subsets, one element is selected in each of them, and they are swapped. Then, the distance between the subsets and/or within each of the subsets is measured. If the distance between the subsets is smaller than before the swap and/or the distance within the subsets is larger than before the swap, then these new subsets can be output and used as new train and validation subsets. It is preferred to iterate the process until it is no longer possible to increase the distances within the sub sets and/or reduce the distance between sub sets, or until a predetermined magnitude of this distances is reached. It is noted that swapping has a particularly strong effect on the dissimilarity of and between the subsets if the subsets have a low cardinality. In other words, swapping has a high effect where only a limited number of data elements are available.

Swapping is particularly advantageous for the following reason: Any permutation that swaps elements of two subsets of a given set can be represented as a composition of permutations swapping their respective elements one by one, i.e. any permutation can be reached by a sequence of swaps. Such a sequence of permutations can be defined that acts on the input data set $X$ such that each of them minimises the distance between the set and its complement in $X$, i.e. for subsets $S, T, T', T'' \in X$

$$T \leftrightarrow T'$$

$$d(T, X \backslash T) \geq d(T'', X \backslash T'') \geq d(T', X \backslash T'')$$

for any set $T''$ in $X$ which can be obtained from $T$ by swapping at most one element between $T$ and $X \backslash T$. By iterating swaps, an end will be reached since it is a decreasing sequence, and the minimum distance set (i.e. $S$) exists. Even if the minimum distance set might not be reached, number of iterations reduces the distance between the feature representations (e.g. class histograms) of $T$ and $X \backslash T$.

The data subsets are used in optional step 126, wherein a machine learning model is trained on one of the subsets to determine a feature representation of one or more of the data elements, and/or to classify the data elements. In optional step 128, the machine learning model is tested on another one of the subsets.

In an embodiment, the following algorithm (in pseudocode) is used:

Find the most similar elements of the original data set:
x, y = argmin(d(x, y) for x, y in X if x != y)

Initialize subsets and distances:
T = {x}, S = {y}, d_T = 0, d_S = 0, X <- X\{x, y}

Determine pairs by minimizing a dissimilarity in the subsets, and move the elements by maximizing a dissimilarity in the subsets:

```
while |X| > 1:
  x, y = argmin(d(x, y) for x, y in X if x != y)
  X <- X\{x, y}
  d_xT = sum(d(x, t) for t in T)
  d_yS = sum(d(y, s) for s in S)
  d_yT = sum(d(y, t) for t in T)
  d_xS = sum(d(x, s) for s in S)
  if d_xT + d_yS >= d_yT + d_xS:
      T <- T + {x}, S <- S + {y}, d_T <- d_T + d_xT, d_S <- d_S + d_yS
  else:
      T <- T + {y}, S <- S + {x}, d_T <- d_T + d_yT, d_S <- d_S + d_xS
```

In case there is a singleton left in X, it is added to one of the subsets such that the dissimilarity of T is increased:

```
for x in X:
        d_xT = sum(d(x, t) for t in T)
        d_xS = sum(d(x, s) for s in S)
        if d_xT >= d_xS:
            T <- T + {x}, d_T <- d_T + d_xT,
        else:
            S <- S + {x}, d_S <- d_S + d_xS
```

Assign the subsets S and T to different tasks (as training and test sets, respectively):

```
if |T| > |S| or (|T| = |S| and d_T > d_S):
    X_train = T, X_test = S
else:
    X_train = S, X_test = T
```

Figure 2 shows a block diagram of data structures. The data structures are usable by the steps of method 100. The input data set 200 comprises a plurality of data elements 202. The data elements may comprise images, such as images captured by a synthetic aperture radar (SAR), for example satellite based SAR. The images may have a data format of 20k x 20k unit16 pixels, and therefore a large file size. In this simplified drawing, only three data elements are shown, whereas in realistic data sets, a much larger number of data items is contained in the input data set.

The subset generation process shown herein illustrates a part of the algorithm implemented by the pseudocode in the description of Figure 1 above.

For each of the data elements 202, there is a feature representation 204, 206, 208. The feature representations indicate features comprised in the data elements. In an embodiment, a feature representation is identical to the data element. In another embodiment, the feature representation includes a feature vector obtainable by a machine learning module. A feature vector is preferred to be smaller than the data element, e.g. by having a lower dimensionality, and thus be computationally more efficient to process.

In this example, the feature vector is indicative of a class distribution of semantic segmentation. Such classes of semantic segmentation are defined such that a data element may include a plurality of instances of one or more classes. A class distribution can therefore be defined for a data element (such as the pixels of an image showing a vehicle etc.) and for an entire data set for aggregated classes (such as the pixels on any image in the data set showing a vehicle etc.). This can be embodied as a histogram, wherein each bin corresponds to the count of elements of a given class. For example, we may define X as a set of annotated images, wherein each pixel corresponds to one of C predefined classes. Then for each image x in X, a histogram h of class values can be defined as a vector of the number of pixels of class c in X. The histogram can be normalised and/or scaled to correct the effect that for an image, not every pixel might be assigned to any of the classes. Therefore, for a classification problem, the feature representation may include a class histogram. In other applications, the feature representation may include a data structure without such a meaning.

The feature vector may be part of a metric space, such that a metric can be defined that allows calculation of a distance between any two of the feature representations. In the present example, the element distances between the feature representations 204, 206, 208, can be determined pairwise, and the element distance 210 between feature representation 2, 206, and feature representation 3, 208, is minimized. As a consequence of this, the corresponding data items are included into a pair 212 (dot-dashed arrow). As a rule, the data elements of a pair are to be included into different subsets A, 214, and B, 218, rather than in the same subset. This allows adding data elements to the subsets such that a dissimilarity between the subsets is minimized.

A second decision is to be made as to which data element in the pair 212 is to be included into which subset. This decision can in principle be made randomly because the dissimilarity can be minimized independently from this decision. However, it is preferred to determine an element-subset distance 226. This distance is based on the feature representations 206, 208 of the respective data items in the pair and feature representations 222, 224 of the subsets. It determines a dissimilarity between the data items and the subsets for each of the cases where the first data element is included into subset A and the second data element is included into subset B (solid line arrows), and the case where it is vice versa (dotted line arrows). The case that maximized the dissimilarity is chosen.

In other words: A first element of the pair is moved to the first subset and a second element of the pair is moved to the second subset if the sum of a distance between the first element and the first subset and the second element and the second subset is larger than the sum of a distance between the first element and the second subset and the second element and the first subset. The second element of the pair is moved to the first subset and the first element of the pair is moved to the second subset otherwise.

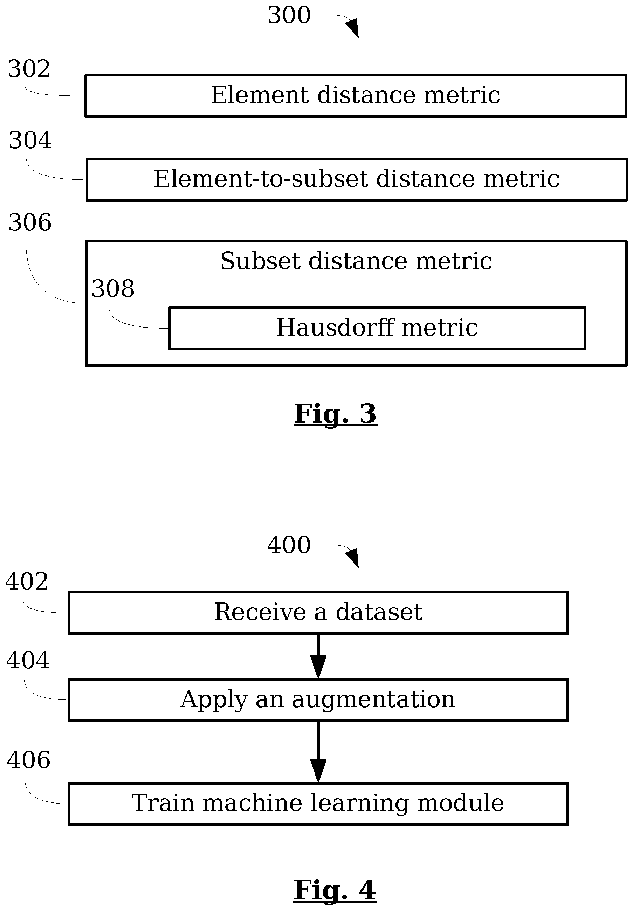

Figure 3 shows a block diagram of metrics.

The metrics are related to the dissimilarity of data elements or data sets, respectively. Starting from a data set or data element, a feature representation may be determined such that it is an element of a metric space, i.e. a metric is defined that allows determining a distance between two entities (data elements or data sets).

In particular, two entities may be defined as similar if a distance between their representations is below a predefined threshold. A dissimilarity is therefore related to a higher distance. In case of a segmentation task, the representations include class distributions.

The element distance metric 302 includes a function that can be used to determine a distance between elements, such as distance 210. The element distance metric may include a Minkowski distance, a Euclidean distance, or a Chebyshev distance. However, other metrics may be chosen.

The element-to-subset distance metric 304 is indicative of a distance between a data element and a subset. It can be defined as the minimum distance between the data element and any data element included in the subset.

The subset distance metric 306 is preferably based on the element distance metric. In an embodiment, the subset distance metric may include a Hausdorff metric 308.

Figure 4 shows a flow chart of a computer-implemented method of generating trained machine learning module.

The method begins by receiving, 402, a data set. The data set may be similar to input data set 200 of Figure 2. The data elements comprise one or more features. If the data elements are images, the features may relate to the presence or absence of objects on the images.

The method goes on by applying, 404, an augmentation to one or more of the data elements.

The augmentation may include one or more of: downsampling, tiling, concatenation, averaging, cropping, deforming, or rotating. These techniques allow adapting the dimensionality of the input data to an input of a neural network.

The augmentation may further include a linear shift of values, scaling, and/or a normalization. A shift may include a [0, 1] or [-1, 1] linear domain shift. Normalization may include normalizing to a mean value or median at zero, and a standard deviation of 1. Scaling may include application of a logarithm with base 2. This is advantageous for SAR images because this makes them more visually similar to red/green/blue (RGB) images.

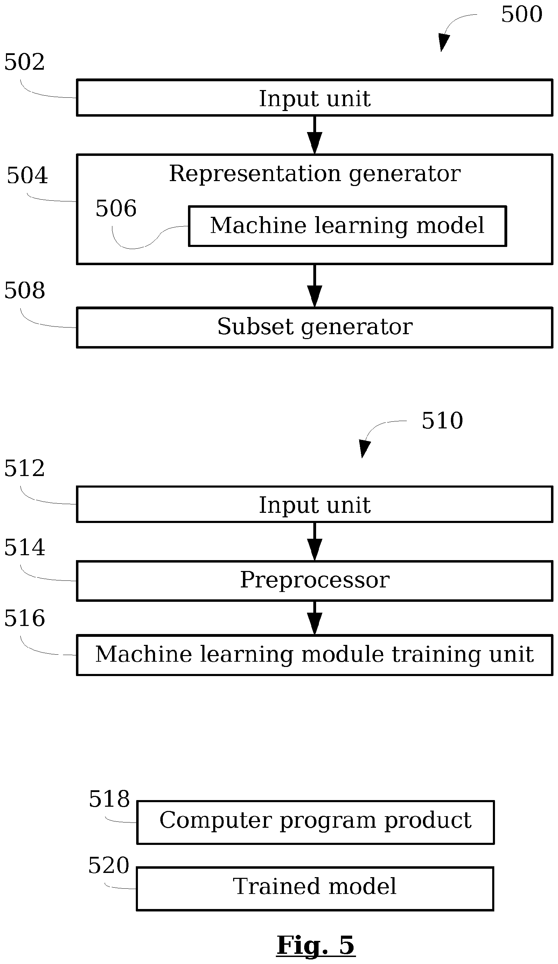

The machine learning module may include module 506 of Figure 5. The machine learning module may include a neural network. It is preferred if the neural network comprises one or more residual layers. For example, ResNet50 or a similar network can be used as an implementation. The machine learning module may include an autoencoder. Training may include contrastive learning. It is more preferred if the neural network contains a downsampling component and a classification head. Method 400 may relate to training only the downsampling component without the classification head, so that the downsampling component can be used to determine the feature representations as described above. This has the advantage that the classification head can later be added to the thus pretrained downsampling component, and the full neural network can be trained in step 126 of method 100. Training the classification head may include unsupervised training by techniques known in the art. Unsupervised training may include application of an auto encoder and/or contrastive learning. Alternatively, training may include a form of supervised learning.

The method allows providing a trained machine learning model that is applicable to predict a projection of a data element into a lower dimensional vector space. For example, if the data element comprises an image of high dimensionality, e.g. 20k x 20k pixels, the machine learning model is applicable to determine a much smaller latent representation as a feature representation. It is preferable to choose a neural network that is similar in structure to the neural network for which the data subsets generated by the method 100 of Figure 1 are to be used. Thereby, the feature representations are similar and adapted to the type of data of the data set.

Figure 5 shows a block diagram of systems and computer program products. Systems 500 and 510 may include processors and storage devices, general purpose hardware and special purpose hardware, such as processors specialized on parallel computing.

System 500 is operable to determine a subset. Input unit 502 is operable to determine an input data set (step 102). Representation generator 504 is operable to determine feature representations and distances (steps 104-108). Representation generator 504 may include a trained machine learning model 506 similar to machine learning model generable by system 510. It is preferred that the machine learning model 506 includes a deep neural network. In embodiments, the deep neural network may include a classifier without a classification head. Subset generator 508 is operable to execute steps 110-124 of method 100.

System 510 is operable to train a machine learning module. Input unit 512 is operable to receive, 402 an input data set. Preprocessor 514 is operable to apply, 404, an augmentation. The machine learning module training unit 516 is operable to train, 406 a machine learning module to classify a data element.

Computer program product 518 is comprises instructions, that, when executed by a processor of the computer, cause the computer to execute method 100 or 400.

**Reference signs**

| 100 | Computer-implemented method |
|---|---|
| 102-128 | Steps of method 100 |
| 200 | Input data set |
| 202 | Data elements of input data set 200 |
| 204 | Feature representation 1 of a first data element |
| 206 | Feature representation 2 of a second data element |
| 208 | Feature representation 3 of a third data element |
| 210 | Element distance between feature representations 2 and 3 |
| 212 | Pair of elements |
| 214 | Subset A |
| 216 | Data elements of Subset A |
| 218 | Subset B |
| 220 | Data elements of Subset B |
| 222 | Feature representation of subset A |
| 224 | Feature representation of subset B |
| 226 | Element-subset distance |
| 228 | Subset distance |
| 300 | Distance metrics |
| 302 | Element distance metric |
| 304 | Element-to-subset distance metric |
| 306 | Subset distance metric |
| 308 | Hausdorff metric |
| 400 | Computer-implemented method |
| 402-406 | Steps of method 400 |
| 500 | System for generating a subset |
| 502 | Input unit |
| 504 | Representation generator |
| 506 | Machine learning module |
| 508 | Subset generator |
| 510 | System for training a machine learning model |
| 512 | Input unit |
| 514 | Preprocessor |
| 516 | Machine learning module training unit |
| 518 | Computer program product |
| 520 | Trained model |

**Claims**

1. A computer-implemented method of generating trained machine learning module, the method comprising:

   receiving a data set comprising a plurality of data elements (202),
   preferably applying an augmentation to one or more of the data elements (202), and
   training a machine learning module on the training data set to determine a feature representation (204, 206, 208) of one or more of the data elements (202).

2. The method of claim 1, wherein

   the augmentation includes one or more of: downsampling, tiling, concatenation, averaging, cropping, deforming, rotating, a linear shift of values, scaling, and/or a normalization;

the machine learning module includes a neural network, preferably a neural network comprising one or more residual layers; and/or

training includes unsupervised training.

3. A computer-implemented method of generating subsets (214, 216) of a data set, the method comprising:

determining an input data set (200) comprising a plurality of data elements (202), wherein the data elements (202) comprise one or more features; and

splitting the data set into a first subset (214) and a second subset (216) such that a dissimilarity between the distributions of aggregated features included in each of the subsets (214, 216) is minimized.

4. The method of claim 3,
wherein splitting the data set comprises minimizing a subset distance indicative of a dissimilarity between the subsets (214, 216), wherein the subset distance is measured by a subset distance metric (306).

5. The method of claim 4,

further comprising determining subset feature representations (222, 224) indicative of features of the subsets (214, 216);

wherein the subset distance metric (306) comprises a distance metric between subset feature representations (222, 224).

6. The method of any of claims 3-5,

further comprising determining respective element feature representations (204, 206, 208) indicative of features of the data elements (202); and

determining element distances (210) between the feature representations (204, 206, 208) by an element distance metric (302), wherein the element distances (210) are indicative of a dissimilarity between elements; and

wherein the or a subset distance metric (306) is preferably based on the element distances (210).

7. The method of claim 6, wherein splitting the data set further includes

determining a pair (212) of data elements (202) corresponding to the feature representations (204, 206, 208) at a minimal element distance (210); and

moving each data element (202) of the pair from the input data set (200) into a respective one of the subsets (214, 216).

8. The method of any of claims 3-7,
wherein splitting the data set comprises maximizing a dissimilarity between the data elements in one or more of the subsets (214, 216).

9. The method of any of claims 6-8, wherein splitting the data set comprises maximizing the element distances (210) between elements in one or more of the subsets (214, 216).

10. The method of any of claims 7-9, wherein
moving each data element of the pair into a respective one of the subsets (214, 216) includes maximising a sum of element distances (210) between each data element of the pair and the subset to which it is moved.

11. The method of any of claims 3-10, further comprising swapping data elements between the data subsets (214, 216) such that

a dissimilarity between distributions of aggregated features of the subsets (214, 216) is reduced; and/or
a dissimilarity between data elements within the subset is increased.

12. The method of any of claims 3-11,

wherein the feature representations (204, 206, 208) are determined by a machine learning module (506), preferably the machine learning module determined according to claim 1 or 2; and

preferably further comprising:

training a machine learning algorithm, preferably a machine learning module (506) determined according to claim 1 or 2, on one of the subsets (214, 216) to determine a feature representation (204, 206, 208) of one or more of the data elements; and
more preferably testing the trained machine learning algorithm on a second one of the subsets (214, 216).

13. The method of any of the preceding claims, wherein the data elements include samples of a classification problem, and/or images, preferably SAR images, and more preferably SAR satellite images; and/or
the feature representations (204, 206, 208) include class histograms indicative of a class distribution of the data elements, wherein the classes preferably relate to segments included within the data elements.

14. A system (500, 510) comprising one or more processors and one or more storage devices, wherein the system (500, 510) is configured to perform the computer-implemented method of any one of claims 1-13.

15. A computer program product for loading into a memory of a computer, comprising: instructions, that, when executed by a processor of the computer, cause the computer to execute a computer-implemented method of any of claims 1-13, and/or a trained machine learning module (506) obtainable by the computer-implemented method claim 1 or 2.

**Fig. 1**

**Fig. 2**

300

302 — Element distance metric

304 — Element-to-subset distance metric

306 — Subset distance metric

308 — Hausdorff metric

**Fig. 3**

400

402 — Receive a dataset

404 — Apply an augmentation

406 — Train machine learning module

**Fig. 4**

500

502

Input unit

504

Representation generator

506

Machine learning model

508

Subset generator

510

512

Input unit

514

Preprocessor

516

Machine learning module training unit

518

Computer program product

520

Trained model

**Fig. 5**

Europäisches
Patentamt

European
Patent Office

Office européen
des brevets

## EUROPEAN SEARCH REPORT

**Application Number**

EP 23 21 3151

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENG GONG ET AL: "Remote Sensing Image Scene Classification Meets Deep Learning: Challenges, Methods, Benchmarks, and Opportunities", 27 June 2020 (2020-06-27), IEEE JOURNAL OF SELECTED TOPICS IN APPLIED EARTH OBSERVATIONS AND REMOTE SENSING, IEEE, USA, PAGE(S) 3735 - 3756, XP011798062, ISSN: 1939-1404 [retrieved on 2020-07-08] * page 3736; figure 3 * * page 3742; figure 8 * * page 3743, column 2, paragraph 2 * * page 3750, column 1, paragraph 2 * ----- | 1,2, 13-15 | INV. G06V10/774 G06V10/82 G06V20/13 |
| X | DAOYU LIN ET AL: "MARTA GANs: Unsupervised Representation Learning for Remote Sensing Image Classification", ARXIV.ORG, CORNELL UNIVERSITY LIBRARY, 201 OLIN LIBRARY CORNELL UNIVERSITY ITHACA, NY 14853, 28 December 2016 (2016-12-28), XP081350467, DOI: 10.1109/LGRS.2017.2752750 * "Training protocol"; page 3692, column 1 * ----- | 1,2, 13-15 | |
| A | LI ZHILI ET AL: "Deep Multiple Instance Convolutional Neural Networks for Learning Robust Scene Representations", 13 January 2020 (2020-01-13), IEEE TRANSACTIONS ON GEOSCIENCE AND REMOTE SENSING, IEEE, USA, PAGE(S) 3685 - 3702, XP011784792, ISSN: 0196-2892 [retrieved on 2020-04-21] * page 4, column 11, paragraph 1; figure 4 * ----- -/-- | 2 | TECHNICAL FIELDS SEARCHED (IPC) G06V |

The present search report has been drawn up for all claims

| Place of search | Date of completion of the search | Examiner |
|---|---|---|
| The Hague | 1 August 2024 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

**Application Number**

EP 23 21 3151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/198800 A1 (KRASSER SVEN [US] ET AL) 12 July 2018 (2018-07-12) <br> * paragraphs [0077], [0080], [0081], [0096], [0118] * <br> - - - - - | 3-12 | |
| | | | **TECHNICAL FIELDS SEARCHED (IPC)** |

The present search report has been drawn up for all claims

| Place of search | Date of completion of the search | Examiner |
|---|---|---|
| The Hague | 1 August 2024 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 23 21 3151

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1, 2, 13-15

   Training a machine learning model to generate feature representations. Using data augmentation to provide more training samples.
   - - -

2. claims: 3-12

   Splitting a data set in two sub-sets such that a dissimilarity between the distributions of aggregated features included in each of the subsets is minimized.
   - - -

## ANNEX TO THE EUROPEAN SEARCH REPORT
## ON EUROPEAN PATENT APPLICATION NO.

EP 23 21 3151

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2024

| Patent document cited in search report | Publication date | Patent family member(s) | Publication date |
|---|---|---|---|
| US 2018198800 A1 | 12-07-2018 | EP 3346410 A1 | 11-07-2018 |
| | | US 2018198800 A1 | 12-07-2018 |
| | | US 2021075798 A1 | 11-03-2021 |

EPO FORM P0459

For more details about this annex : see Official Journal of the European Patent Office, No. 12/82